# EUROPEAN PATENT APPLICATION

(11) **EP 4 539 246 A1**
(43) Date of publication of application: **16.04.2025**
(21) Application number: 23851296.6
(22) Date of filing: 15.05.2023
(51) Int. Cl.: H01Q 1/00, H01Q 21/00, H01Q 25/02, H01Q 21/29

(54) **ANTENNA SYSTEM**

(30) Priority: 09.08.2022 CN 202210950565
(71) Applicant: Huawei Technologies Co., Ltd., Shenzhen, Guangdong 518129 (CN)
(72) Inventor: WANG, Qiang, Shenzhen, Guangdong 518129 (CN); PU, Tao, Shenzhen, Guangdong 518129 (CN); LV, Jia, Shenzhen, Guangdong 518129 (CN); LI, Liang, Shenzhen, Guangdong 518129 (CN); WANG, Xiaojian, Shenzhen, Guangdong 518129 (CN)
(74) Representative: Gill Jennings & Every LLP
(86) International application number: PCT/CN2023/094197
(87) International publication number: WO 2024/032066

(57) **Abstract**

This application discloses an antenna system, including a plurality of antenna groups. Each antenna group includes two antenna array planes and one mounting panel. The two antenna array planes are symmetrically mounted on two planes of the mounting panel. Each antenna array plane includes at least one antenna element. The two antenna array planes in each antenna group work simultaneously. The antenna system includes a plurality of radiation areas, and each radiation area is formed by cooperative radiation of beams from a plurality of antenna array planes in different antenna groups. In this application, one mounting panel in an antenna group is connected to two symmetric antenna array planes. In a same spatial condition, more antenna array planes can be deployed in the antenna system. Therefore, overall coverage of the antenna system is improved without additional wind resistance. In addition, each radiation area in the antenna system is formed by cooperative radiation of a plurality of antenna array planes. Therefore, a capacity and a gain of the antenna system are also improved.

## Description

This application claims priority to Chinese Patent Application No. CN202210950565.0, filed with the China National Intellectual Property Administration on August 09, 2022 and entitled "ANTENNA SYSTEM", which is incorporated herein by reference in its entirety.

### TECHNICAL FIELD

This application relates to the field of communication technologies, and in particular, to an antenna system.

### BACKGROUND

In an antenna system, a size of an antenna array plane is limited due to factors such as wind resistance or a form, and consequently, a capacity and coverage of the antenna system are both limited.

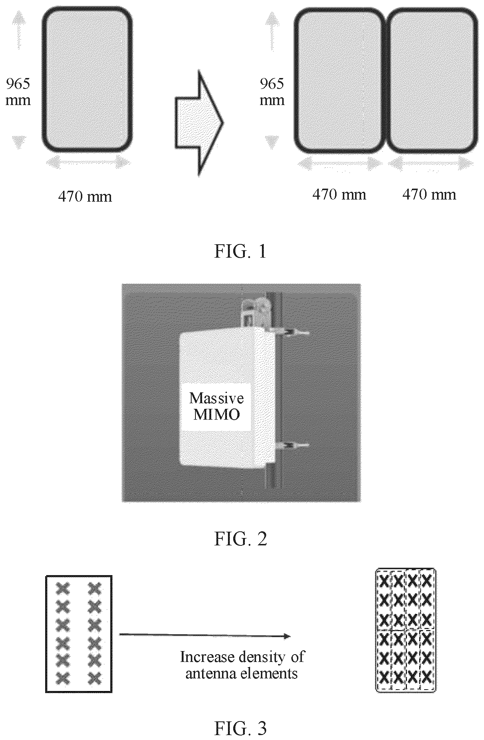

FIG. 1 is a diagram of a layout of a conventional antenna array plane. As shown in FIG. 1, on the basis of an original antenna array plane, another same antenna array plane is mounted adjacently to the antenna array plane, and the two antenna array planes are placed side by side. In this way, after the two antenna array planes are combined, a capacity and coverage of an antenna system can be improved.

However, because there are two side-by-side antenna array planes in the antenna system, and a size is doubled, a windward area of the antenna system is doubled. Consequently, wind resistance is increased and structural stability of the antenna system is decreased.

### SUMMARY

This application provides an antenna system, to improve a capacity and coverage of the antenna system.

According to a first aspect, this application provides an antenna system. The antenna system includes a plurality of antenna groups. Each antenna group includes two antenna array planes and one mounting panel. The two antenna array planes are symmetrically mounted on two planes of the mounting panel, and each antenna array plane includes at least one antenna element. Quantities of antenna elements in two antenna array planes in a same antenna group may be the same or different, and quantities of antenna elements in different antenna groups may be the same or different. This is not limited in this application.

The two antenna array planes in each antenna group work simultaneously. A beam radiated by each antenna array plane in each antenna group may intersect with a beam radiated by an antenna array plane in another antenna group, to obtain at least one radiation area. An antenna subarray synthesized from antenna elements in the antenna array plane separately forms a plurality of same beams (the same beams are beams with approximately same overall coverage), and the plurality of same beams are one beam defined in this application. Therefore, the antenna system includes a plurality of radiation areas, and each radiation area is formed by cooperative radiation of beams from a plurality of antenna array planes in different antenna groups. Because two antenna array planes in a same antenna group are symmetrically mounted, beams radiated by the two antenna array planes in the same antenna group have opposite angles, and has no intersection area. Beams that form a same radiation area do not include beams from two antenna array planes in a same antenna group.

In this application, one mounting panel in an antenna group is connected to two symmetric antenna array planes. In a same spatial condition, more antenna array planes can be deployed in the antenna system. Therefore, overall coverage of the antenna system is improved without additional wind resistance. In addition, each radiation area in the antenna system is formed by cooperative radiation of a plurality of antenna array planes. Therefore, a capacity and a gain of the antenna system are also improved.

According to the first aspect, in an optional implementation, an antenna subarray synthesized from antenna elements to which all antenna ports in each antenna array plane are mapped includes two beams on a horizontal plane. Each beam forms an intersection area with a beam of an antenna array plane in another antenna group, and the intersection area is a radiation area in this application.

According to the first aspect, in an optional implementation, two beams that form a same radiation area have same radiation ranges and same horizontal directions of normals, so that the two beams of the same radiation area overlap as much as possible, to improve utilization of each beam of each antenna array plane.

According to the first aspect, in an optional implementation, the antenna system includes three antenna groups. That is, the antenna system includes six antenna array planes. Each antenna array plane includes two beams, and each beam forms a radiation area with a beam of an antenna array plane in another antenna group. Therefore, the antenna system includes six radiation areas. A radiation range of a beam of each antenna array plane may be calibrated to 60 degrees. Because two beams that form a same radiation area have same radiation ranges and same horizontal directions of normals, coverage of a radiation area formed by every two beams is also 60 degrees. Because the antenna system includes six radiation areas, the antenna system implements coverage of 60°*6=360°.

According to the first aspect, in an optional implementation, the antenna system includes two antenna groups. That is, the antenna system includes four antenna array planes. Each antenna array plane includes two beams, and each beam forms a radiation area with a beam of an antenna array plane in another antenna group. Therefore, the antenna system includes four radiation areas. A radiation range of a beam of each antenna array plane may be calibrated to 90 degrees. Because two beams that form a same radiation area have same radiation ranges and same horizontal directions of normals, coverage of a radiation area formed by every two beams is also 90 degrees. Because the antenna system includes four radiation areas, the antenna system implements coverage of 90°*4=360°.

It should be understood that, in addition to the foregoing antenna system including two or three antenna groups, the antenna system may alternatively include another quantity of antenna groups. For example, the antenna system includes, but not limited to, four antenna groups or five antenna groups. A radiation range of each beam is adjusted according to an actual quantity of antenna groups. This is not specifically limited herein.

According to the first aspect, in an optional implementation, an antenna subarray synthesized from antenna elements to which all antenna ports in each antenna array plane are mapped includes one beam, and the beam forms an intersection area with a beam of another antenna array plane. The intersection area is a radiation area in this application. There may be two or more beams that form a same radiation area.

According to the first aspect, in an optional implementation, a plurality of beams that form a same radiation area have same radiation ranges and different horizontal directions of normals.

According to the first aspect, in an optional implementation, before radiation areas are formed by beams of antenna array planes, phase calibration needs to be performed, so that phases of beams of a same radiation area are aligned as much as possible. Therefore, before the antenna system generates the plurality of radiation areas, each antenna group in the antenna system needs to first perform intra-group phase calibration and/or inter-group phase calibration. The intra-group phase calibration is a phase calibration procedure between two antenna array planes in a same antenna group, and the inter-group phase calibration is a phase calibration procedure between two antenna array planes from different antenna groups. Specifically, the plurality of radiation areas in this application may be generated after each antenna group in the antenna system performs intra-group phase calibration; or the plurality of radiation areas in this application may be generated after each antenna group in the antenna system performs inter-group phase calibration; or the plurality of radiation areas in this application may be generated after each antenna group in the antenna system performs intra-group phase calibration and inter-group phase calibration. After each antenna group performs intra-group phase calibration and inter-group phase calibration, phases of beams in antenna array planes in the antenna system can be aligned as much as possible, so that each antenna array plane forms radiation areas with a plurality of different antenna array planes, and gains of radiation areas formed by different beams are also increased.

According to the first aspect, in an optional implementation, in an intra-group phase calibration procedure, the antenna system includes a plurality of calibration ports, each calibration port corresponds to one antenna group, each calibration port is connected to two antenna array planes in the antenna group, and each calibration port is configured to perform the intra-group phase calibration procedure in an antenna group including the calibration port.

According to the first aspect, in an optional implementation, each antenna array plane is configured to form one radiation area at a moment, and a quantity of radiation areas included in the antenna system is equal to a quantity of antenna groups. Further, when radiation ranges and horizontal directions of normals of antenna array planes from different antenna groups can meet a condition of forming a radiation area (that is, beams from the antenna array planes in the different antenna groups can form at least an intersection area), each antenna array plane may select another antenna array plane for cooperative radiation based on an actual application scenario, to perform phase calibration, so as to obtain the radiation area.

According to the first aspect, in an optional implementation, each antenna array plane may form N radiation areas at a moment. N is an integer greater than or equal to 2, and a quantity of radiation areas included in the antenna system is greater than a quantity of antenna groups.

**In** conclusion, in this application, when the quantity of antenna groups is fixed, the quantity of radiation areas generated by the antenna system may be adjusted based on an actual situation, to improve working flexibility of the antenna system.

According to the first aspect, in an optional implementation, each radiation area includes a plurality of cells, and each cell corresponds to one carrier frequency. Specifically, a cell is also referred to as a cellular cell, and is a minimum unit area covered in the antenna system.

According to the first aspect, in an optional implementation, the antenna system includes one target radiation area, and the target radiation area is at least two radiation areas that serve an access device in all radiation areas in the antenna system. Specifically, the antenna system may determine, from all the radiation areas in the antenna system according to an access requirement of the access device, the at least two radiation areas that serve the access device, to implement cooperation between different radiation areas and improve an antenna gain.

According to the first aspect, in an optional implementation, the target radiation area is the radiation areas in the antenna system. That is, all the radiation areas in the antenna system are selected at the same time, to provide a service for an access device, so as to further improve an antenna gain.

According to the first aspect, in an optional implementation, each antenna group includes a first included angle and a second included angle, the first included angle and the second included angle each are an included angle formed between each antenna array plane and an antenna element in the antenna array plane in the antenna group, and the first included angle and the second included angle are axially symmetric with respect to the mounting panel. In a structure in which no included angle is formed between an antenna array plane and an antenna element, because two antenna array planes that form a same radiation area have different mounting angles, horizontal directions of normals of beams of the two antenna array planes are different, and the two beams cooperatively radiate, to form a radiation area. However, in this case, some signals in each of the two beams are excluded from the radiation area, and the radiation area is not formed, resulting in a waste of resources. In a structure in which an included angle is formed between an antenna array plane and an antenna element, the antenna groups include same first included angles and same second included angles. In this case, under the effect of the first included angle and the second included angle, antenna elements in two antenna array planes that form a same radiation area may be more parallel, and horizontal directions of normals of two beams formed by the two antenna array planes may be more consistent. This greatly increases an intersection area between the two beams and increases the radiation area, and further improves beam utilization.

According to the first aspect, in an optional implementation, the antenna system includes a plurality of radiation areas, and each radiation area may serve different terminal devices. However, in actual application, quantities of terminal devices in the radiation areas are usually different and unbalanced. For a radiation area with a large quantity of terminal devices, power of a beam in the radiation area should be increased, to meet requirements of the terminal devices in the radiation area. Therefore, one electric bridge may be configured in each antenna group, two output ends of the electric bridge are respectively connected to two antenna array planes in the antenna group, and two input ends of the electric bridge are respectively connected to two power amplifiers. The electric bridge is configured to adjust power levels of the two antenna array planes in the antenna group, to improve flexibility of power of the antenna array planes, and adapt to power requirements of different radiation areas. In actual application, one antenna array plane usually has a plurality of antenna ports. Therefore, one antenna group may include a plurality of electric bridges, and two output ends of each electric bridge are separately connected to one of the antenna ports in the two antenna array planes in the antenna group.

According to the first aspect, in an optional implementation, the antenna system includes a plurality of poles, each antenna group is mounted on one pole, the two antenna array planes in the antenna group are symmetric with respect to a first plane of the mounting panel, and a central axis of the pole is located on the first plane. Therefore, in a same spatial condition, more antenna array planes can be deployed in the antenna system in this application. In addition, a pole can block a beam of an antenna array plane as little as possible, to obtain a higher antenna gain. It should be understood that, in actual application, due to an error in a mounting process, an error in a device form, or the like, the central axis of the pole may not be accurately located on the first plane, and a deviation may exist. Such deviation is not limited in this application. In other words, effect brought by "the central axis of the pole located on the first plane" is also applicable to the foregoing scenario in which a deviation exists.

According to the first aspect, in an optional implementation, because the two antenna array planes are symmetrically mounted in the antenna group, a part of signals of each antenna array plane are transmitted to the other antenna array plane in the antenna group, causing interference and reducing a front-to-back ratio of the antenna group. In view of this, the mounting panel in each antenna group may include at least one turned edge, and the turned edge is configured to block a signal that is radiated by an antenna array plane in the antenna group in a reverse direction of a normal, to improve the front-to-back ratio of the antenna group. For example, the turned edge may be a metal plate.

According to the first aspect, in an optional implementation, the mounting panel in each antenna group includes at least one electromagnetic band gap (electromagnetic band gap, EBG), and the EBG is configured to block a signal that is radiated by an antenna array plane in the antenna group in a reverse direction of a normal, to improve the front-to-back ratio of the antenna group.

According to the first aspect, in an optional implementation, in a passive antenna system, two antenna array planes in each antenna group are connected to a same remote radio unit RRU. The mounting panel in each antenna group includes a first feed network, a second feed network, and at least one reflection plate, and the first feed network and the second feed network each feed power to a different antenna array plane in the antenna group including the first feed network and the second feed network. The reflection plate is a structure used to reflect the first feed network and the second feed network. For example, the reflection plate may be a metal plate.

According to the first aspect, in an optional implementation, in the passive antenna system, the mounting panel in each antenna group includes a first feed network, a second feed network, and two reflection plates, and the first feed network and the second feed network are located between the two reflection plates.

According to the first aspect, in an optional implementation, in the passive antenna system, in addition to the first feed network, the second feed network, and the two reflection plates, the mounting panel further includes at least one ground plate, and the ground plate is located between the first feed network and the second feed network. The ground plate is a structure used to reflect the first feed network and the second feed network. For example, the ground plate may be a metal plate.

According to the first aspect, in an optional implementation, in the passive antenna system, the mounting panel includes the first feed network, the second feed network, and at least one reflection plate, and the at least one reflection plate is located between the first feed network and the second feed network. The first feed network and the second feed network may be mounted on the reflection plate, to reduce a thickness and a weight of the antenna group. Specifically, the mounting panel may include two reflection plates, and the first feed network and the second feed network are respectively mounted on planes of different reflection plates. Alternatively, the mounting panel may include one reflection plate, and the first feed network and the second feed network may be mounted on two planes of the reflection plate, to further reduce a thickness and a weight of the antenna group.

According to the first aspect, in an optional implementation, in an active antenna system, the two antenna array planes in each antenna group are located in a same active antenna element (active antenna element, AAU). The mounting panel in each antenna group includes at least one heat sink and at least one active board. The heat sink and the active board are located between the two antenna array planes in the antenna group. The heat sink is configured to dissipate heat of the at least one active board. The at least one active board is configured to feed power to different antenna array planes in the antenna group including the at least one active board.

According to the first aspect, in an optional implementation, in an antenna group of the active antenna system, a mounting panel includes one heat sink and one active board, the active board is connected to two antenna array planes in the antenna group, the active board simultaneously supplies power to antenna elements on the two antenna array planes in the antenna group, the heat sink and the active board are located between two reflection plates, and heat generated when the active board works is dissipated by the heat sink. The mounting panel has a simple structure, and only one heat sink and one active board are required. This facilitates mounting an electric bridge between the two antenna array planes. In addition, hardware resources are saved, and a thickness and a weight of the antenna group are reduced.

According to the first aspect, in an optional implementation, in an antenna group of the active antenna system, a mounting panel includes two heat sink and one active board, the active board is connected to two antenna array planes in the antenna group, the active board simultaneously supplies power to antenna elements on the two antenna array planes in the antenna group, and the active board is located between the two heat sinks. A structure of the mounting panel is: a reflection plate, a heat sink, the active board, a heat sink, and a reflection plate from outside to inside. The mounting panel requires only one active board. This saves hardware resources and reduces a thickness and a weight of the antenna group. In addition, because two heat sinks are deployed, a heat dissipation capability of the antenna group is improved.

According to the first aspect, in an optional implementation, in an antenna group of the active antenna system, a mounting panel includes one heat sink and two active boards, each active board is connected to a different antenna array plane in the antenna group, each active board supplies power to antenna elements of the different antenna array plane in the antenna group, and the heat sink is located between the two active boards. A structure of the mounting panel is: a reflection plate, an active board, the heat sink, an active board, and a reflection plate from outside to inside.

### BRIEF DESCRIPTION OF DRAWINGS

To describe the technical solutions in embodiments of this application or in the conventional technology more clearly, the following briefly introduces the accompanying drawings used in describing embodiments or the conventional technology. It is clear that the accompanying drawings in the following descriptions show merely embodiments of this application, and a person of ordinary skill in the art may still derive other drawings from these accompanying drawings without creative efforts.
FIG. 1 is a diagram of a layout of a conventional antenna array plane;
FIG. 2 is a diagram of a scenario in which a quantity of antenna elements is limited due to a size in an antenna system;
FIG. 3 is a diagram of a scenario in which a capacity of an antenna system is increased by increasing a density of antenna elements;
FIG. 4 is a diagram of mounting of a conventional antenna array plane;
FIG. 5 is a diagram of a structure of an antenna system according to this application;
FIG. 6 is a diagram of a structure of mounting an antenna group on a pole according to this application;
FIG. 7 is a diagram of another structure of mounting an antenna group on a pole according to this application;
FIG. 8 is a diagram of a structure of an antenna system including three antenna array planes according to the conventional technology;
FIG. 9 is a diagram of a possible layout of an antenna system according to this application;
FIG. 10A is a diagram of a possible implementation of an antenna system in a long term evolution system scenario according to this application;
FIG. 10B is a diagram of a scenario in which one antenna array plane forms two beams;
FIG. 10C is a diagram of another possible implementation of an antenna system in a long term evolution system scenario according to this application;
FIG. 11 is a diagram of a scenario of intra-group phase calibration and inter-group phase calibration according to this application;
FIG. 12 is a diagram of a scenario of a plurality of radiation areas according to this application;
FIG. 13 is a diagram of a structure of an antenna group including a first included angle and a second included angle according to this application;
FIG. 14 is a diagram of a structure in which two antenna array planes in an antenna group are connected to a same calibration port;
FIG. 15A is a diagram of a structure of configuring an electric bridge in an antenna group according to this application;
FIG. 15B is a diagram of adjusting power of antenna array planes in an antenna group through an electric bridge according to this application;
FIG. 16 is a diagram of a structure of a mounting panel including turned edges or electromagnetic band gaps according to this application;
FIG. 17 is a diagram of a possible structure of a passive antenna system according to this application;
FIG. 18 is a diagram of another possible structure of a passive antenna system according to this application;
FIG. 19 is a diagram of another possible structure of a passive antenna system according to this application;
FIG. 20 is a diagram of a possible structure of an active antenna system according to this application;
FIG. 21 is a diagram of another possible structure of an active antenna system according to this application;
FIG. 22 is a diagram of another possible structure of an active antenna system according to this application;
FIG. 23 is a diagram of a possible structure of a hollow reflection plate according to this application;
FIG. 24 is a diagram of an included angle between two antenna array planes that form a same radiation area according to this application; and
FIG. 25 is a diagram of another included angle between two antenna array planes that form a same radiation area according to this application.

### DESCRIPTION OF EMBODIMENTS

Embodiments of this application provide an antenna system, to improve a capacity and coverage of the antenna system.

The following describes embodiments of this application with reference to the accompanying drawings in embodiments of this application. Terms used in implementations of this application are only used to explain specific embodiments of this application, but are not intended to limit this application. A person of ordinary skill in the art may learn that, with development of technologies and emergence of a new scenario, the technical solutions provided in embodiments of this application are also applicable to a similar technical problem.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in orders except the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following explains and describes some nouns or terms used in this application, and the nouns or terms are also used as a part of the present invention.

A basic principle of massive multiple-input multiple-output (multiple input multiple output, MIMO) is to greatly increase a quantity of antennas in a base station, to form independent narrow beam coverage for different users. A user-based spatial isolation system transmits data of different users at the same time, to increase a system capacity by dozens of times.

In an antenna system, a size of an antenna array plane is limited due to factors such as wind resistance or a form, and consequently, a capacity and coverage of the antenna system are both limited.

FIG. 2 is a diagram of a scenario in which a quantity of antenna elements is limited due to a size in an antenna system. As shown in FIG. 2, in massive MIMO (Massive MIMO) and a terminal device, due to a size limitation, it is impossible to deploy antenna elements more than a bearing range in the massive MIMO or the terminal device, and consequently, a capacity and coverage of the antenna system are limited. In the conventional technology, the capacity and the coverage of the antenna system are usually increased by increasing a quantity of antenna elements.

When a size of an antenna array plane remains unchanged, a quantity of antenna elements is usually increased by increasing a density of antenna elements in the conventional technology. FIG. 3 is a diagram of a scenario in which a capacity of an antenna system is increased by increasing a density of antenna elements. A size of an antenna array plane remains unchanged, and a density of antenna elements is increased (a spacing between antenna elements is shortened). That is, as shown in FIG. 3, a quantity of antenna elements in the antenna array plane is expanded from 12 to 24, to improve a capacity and coverage of the antenna array plane.

However, the close horizontal spacing between the antenna elements causes much coupling between the antenna elements. In this case, a part of energy of an antenna element is absorbed by another adjacent antenna element. Consequently, performance of the antenna elements is reduced, and radiation efficiency of the antenna array plane is reduced.

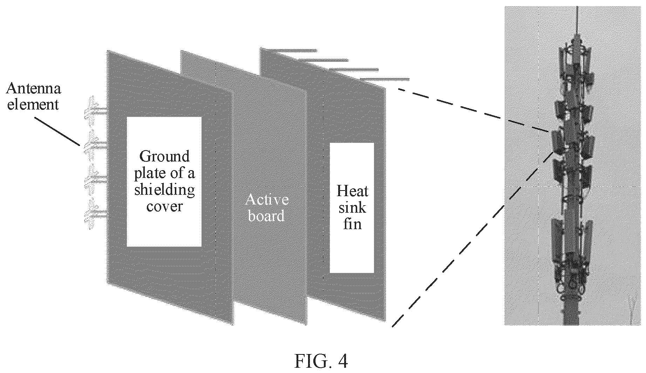

When the density of the antenna elements remains unchanged, a quantity of antenna elements is usually increased by increasing the size of the antenna array plane in the conventional technology. As shown in FIG. 1, on the basis of an original antenna array plane, another same antenna array plane is mounted adjacently to the antenna array plane, and the two antenna array planes are placed side by side. In this way, after the two antenna array planes are combined, the capacity and the coverage of the antenna system can be improved. However, refer to FIG. 4. FIG. 4 is a diagram of mounting of a conventional antenna array plane. As shown in FIG. 4, each active board is located between heat sink fins and a ground plate of a shield cover, and the back of the heat sink fins is connected to a mounting kit, so that the antenna array plane is mounted on a pole. In the layout architecture of the antenna array planes shown in FIG. 1, two antenna array planes are placed side by side. Therefore, two poles are required to mount the two antenna array planes. In this way, antenna deployment costs are increased, and deployment of another antenna is affected, so that an application scenario shown in FIG. 3 is limited. In addition, because there are two side-by-side antenna array planes in the antenna system, and a size is doubled, a windward area of the antenna system is doubled. Consequently, wind resistance is increased and structural stability of the antenna system is decreased.

In view of this, this application provides an antenna system, to improve a capacity and coverage of the antenna system. The antenna system in this application may be used in a base station in a 3G mobile communication system, a base station in a 4G mobile communication system, a base station in a 5G mobile communication system, a base station (which may be specifically a macro base station or a micro base station) in a future mobile communication system, or the like, or an antenna system in another form, for example, a phased array radar.

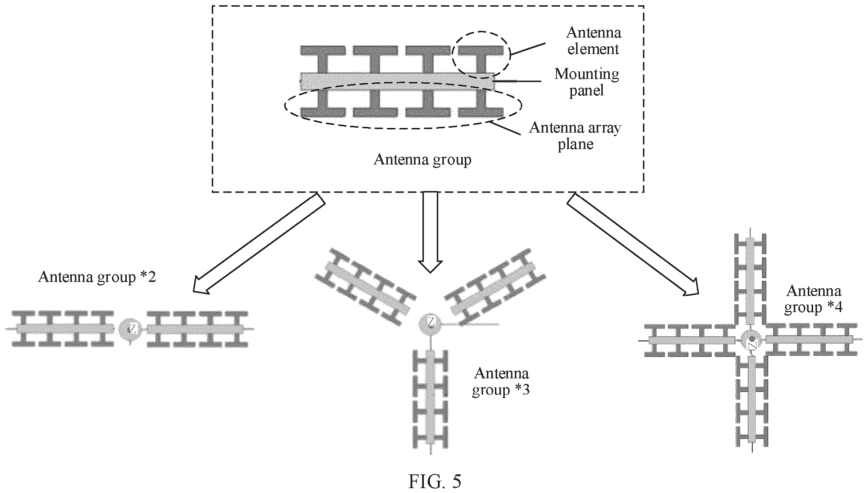

The antenna system in this application includes a plurality of antenna groups in a same structure. For ease of understanding, FIG. 5 is a diagram of a structure of an antenna system according to this application. As shown in FIG. 5, each antenna group in this application includes two antenna array planes and one mounting panel. The two antenna array planes are symmetrically mounted on two planes of the mounting panel, and the two antenna array planes are parallel. That is, the two antenna array planes are two parallel planes, and each antenna array plane includes at least one antenna element. It should be noted that the two antenna array planes in this application are merely logical division, and are not specifically two tangible split planes. In actual application, the two antenna array planes in this application may be two separate planes (for example, curved surfaces or planes) symmetrically mounted on two planes of the mounting panel, or may be one curved surface covering two planes of the mounting panel. In this case, the curved surface covers two curved surfaces of the mounting panel, that is, the two antenna array planes in this application. In addition, in actual application, due to an error in a mounting process, an error in a device form, or the like, the two antenna array planes may not be accurately parallel or symmetrical, and a deviation may exist. Such deviation is not limited in this application. That is, this is also applicable to the foregoing scenario in which a deviation exists.

Quantities of antenna elements in two antenna array planes in a same antenna group may be the same or different, and quantities of antenna elements in different antenna groups may be the same or different. This is not limited in this application. In actual application, the antenna group in this application may be connected, through the mounting panel, to an apparatus (for example, a pole) for fastening the antenna group, to complete mounting and fastening.

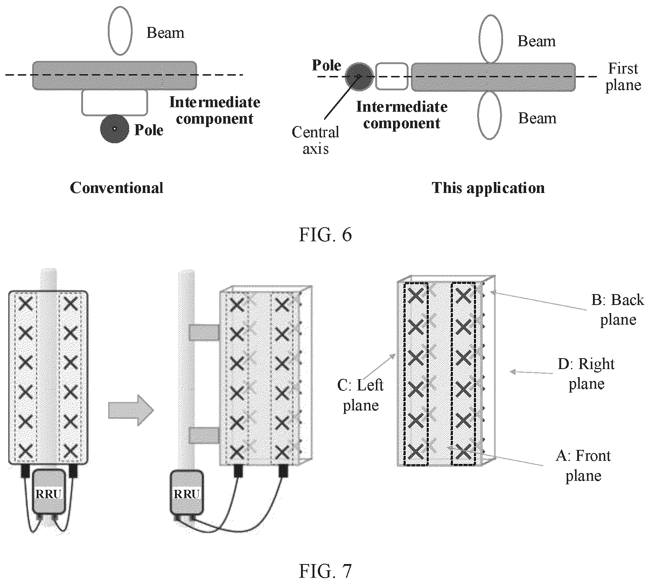

In a possible implementation, the antenna system includes a plurality of poles, each antenna group is mounted on one pole, two antenna array planes in the antenna group are symmetric with respect to a first plane of the mounting panel, and a central axis of the pole is located on the first plane. For ease of understanding, FIG. 6 is a diagram of a structure of mounting an antenna group on a pole according to this application. As shown in FIG. 6, one conventional antenna array plane is mounted on one pole. In this application, two antenna array planes are mounted on a mounting panel, the two antenna array planes are symmetrical with respect to a first plane of the mounting panel, and a central axis of a pole is located on the first plane. In this example, the mounting panel is indirectly connected to the pole through an intermediate component. Therefore, in a same spatial condition, more antenna array planes can be deployed in the antenna system in this application. In addition, a pole can block a beam of an antenna array plane as little as possible, to obtain a higher antenna gain. It should be understood that, in actual application, due to an error in a mounting process, an error in a device form, or the like, the central axis of the pole may not be accurately located on the first plane, and a deviation may exist. Such deviation is not limited in this application. In other words, effect brought by "the central axis of the pole located on the first plane" is also applicable to the foregoing scenario in which a deviation exists.

Further, FIG. 7 is a diagram of another structure of mounting an antenna group on a pole according to this application. As shown in FIG. 7, in a conventional antenna system, a pole is connected to the back of an antenna array plane through an intermediate component, so that the antenna array plane is fastened to the pole. In an antenna system in this application, because two antenna array planes in an antenna group are symmetrically arranged, one antenna array plane is deployed on the back of the other antenna array plane. Therefore, the mounting manner shown in FIG. 7 is used as an example. The mounting panel includes four planes: A, B, C, and D. The plane A and the plane B are respectively used to mount two antenna array planes in the antenna group, and the plane C and the plane D are two side planes of the mounting panel. As shown in FIG. 7, the pole is connected to the plane C of the mounting panel through the intermediate component, so that the antenna group is fastened to the pole. In this state, a central axis of the pole is located on a first plane.

In this application, the two antenna array planes in each antenna group work simultaneously. A beam radiated by each antenna array plane in each antenna group may intersect with a beam radiated by an antenna array plane in another antenna group, to obtain at least one radiation area. An antenna subarray synthesized from antenna elements in the antenna array plane separately forms a plurality of same beams (the same beams are beams with approximately same overall coverage), and the plurality of same beams are one beam defined in this application. Therefore, the antenna system includes a plurality of radiation areas, and each radiation area is formed by cooperative radiation of beams from a plurality of antenna array planes in different antenna groups. Because two antenna array planes in a same antenna group are symmetrically mounted, beams radiated by the two antenna array planes in the same antenna group have opposite angles, and has no intersection area. Beams that form a same radiation area do not include beams from two antenna array planes in a same antenna group.

In FIG. 5, a plurality of antenna groups included in the antenna system are mounted together through a same apparatus. For example, each antenna group is separately installed on a pole, and a plurality of poles of the plurality of antenna groups are connected to a same tubular tower, so that the plurality of antenna groups are mounted on the tubular tower. In actual application, the plurality of antenna groups in the antenna system may not need to be mounted on a same apparatus. For example, the plurality of antenna groups may be deployed in small-range space (for example, each corner on the top of a building), and there is a specific distance between the antenna groups. Therefore, in this application, a connection manner between antenna groups in the antenna system is not limited provided that beams radiated by antenna array planes in the antenna system can form a plurality of radiation areas.

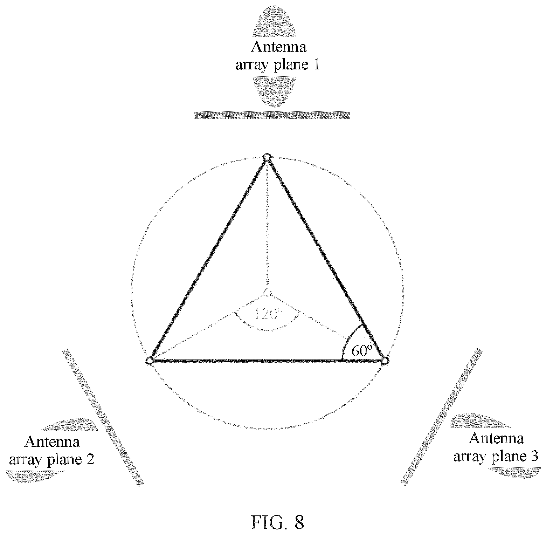

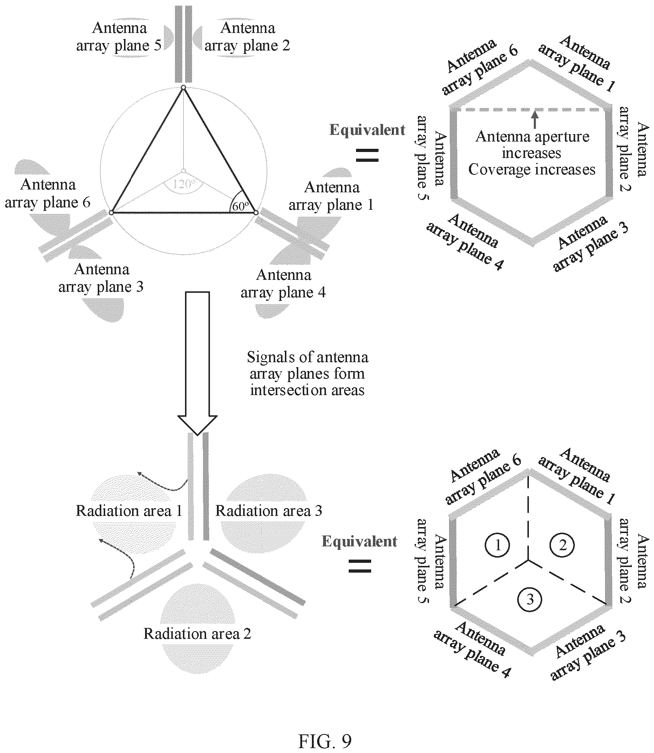

For ease of understanding, the following compares an antenna system that includes three radiation areas in the conventional technology with an antenna system that also includes three radiation areas in this application. FIG. 8 is a diagram of a structure of an antenna system including three antenna array planes according to the conventional technology. Layout positions of the three antenna array planes are shown in FIG. 8. Therefore, the antenna array planes have very small intersections in radiation directions (or a signal in an intersection area is very weak), and each antenna array plane forms one radiation area. In comparison, FIG. 9 is a diagram of a possible layout of an antenna system according to this application. The antenna system includes three antenna groups, and layout positions of the three antenna groups are shown in FIG. 9. An antenna array plane 1 and an antenna array plane 4 are in one group, an antenna array plane 2 and an antenna array plane 5 are in one group, and an antenna array plane 3 and an antenna array plane 6 are in one group. The three antenna groups are respectively deployed at three vertices of an equilateral triangle. As shown in FIG. 9, a beam of the antenna array plane 5 and a beam of the antenna array plane 6 cooperatively radiate, to form a radiation area 1. The radiation area 1 includes an intersection area of the beam of the antenna array plane 5 and the beam of the antenna array plane 6, a non-intersection area that is close to the antenna array plane 6 in the beam of the antenna array plane 5, and a non-intersection area that is close to the antenna array plane 5 in the beam of the antenna array plane 6. A beam of the antenna array plane 1 and a beam of the antenna array plane 2 cooperatively radiate, to form a radiation area 2. The radiation area 2 includes an intersection area of the beam of the antenna array plane 1 and the beam of the antenna array plane 2, a non-intersection area that is close to the antenna array plane 2 in the beam of the antenna array plane 1, and a non-intersection area that is close to the antenna array plane 1 in the beam of the antenna array plane 2. A beam of the antenna array plane 3 and a beam of the antenna array plane 4 cooperatively radiate, to form a radiation area 3. The radiation area 3 includes an intersection area of the beam of the antenna array plane 3 and the beam of the antenna array plane 4, a non-intersection area that is close to the antenna array plane 4 in the beam of the antenna array plane 3, and a non-intersection area that is close to the antenna array plane 3 in the beam of the antenna array plane 4. Therefore, the plurality of radiation areas formed by the plurality of antenna groups in the antenna system in FIG. 9 may be equivalent to a plurality of radiation areas formed by an antenna system in a regular hexagon structure. In actual application, if six antenna array planes are deployed as an antenna system in a regular hexagon structure, each antenna array plane is used as a side of the regular hexagon structure. Therefore, compared with the antenna system in this application in FIG. 9, the antenna system in the regular hexagon structure needs to occupy larger space, has larger wind resistance, and needs to consume more mounting devices (for example, poles).

In addition, compared with the conventional antenna system including three antenna array planes shown in FIG. 8, the antenna system in this application shown in FIG. 9 occupies almost same space without additional wind resistance. However, in the antenna system in this application, a quantity of antenna array planes is doubled, and coverage is also improved. In addition, each radiation area in FIG. 8 is obtained by using a beam radiated by one antenna array plane. In the antenna system in this application shown in FIG. 9, each radiation area is formed by cooperative radiation of a plurality of antenna array planes. Therefore, compared with the radiation area in the conventional antenna system, the radiation area in this application has a higher capacity and a higher gain, and each radiation area has larger coverage.

In this application, one mounting panel in an antenna group is connected to two symmetric antenna array planes. In a same spatial condition, more antenna array planes can be deployed in the antenna system. Therefore, overall coverage of the antenna system is improved without additional wind resistance. In addition, each radiation area in the antenna system is formed by cooperative radiation of a plurality of antenna array planes. Therefore, a capacity and a gain of the antenna system are also improved.

There may be a plurality of different cooperative radiation manners between antenna array planes in the antenna system, to form the radiation areas in this application. The following separately describes the two cooperative radiation manners.

Solution 1: An antenna subarray synthesized from antenna elements to which all antenna ports in each antenna array plane are mapped includes two beams on a horizontal plane. Each beam forms an intersection area with a beam of an antenna array plane in another antenna group, and the intersection area is a radiation area in this application.

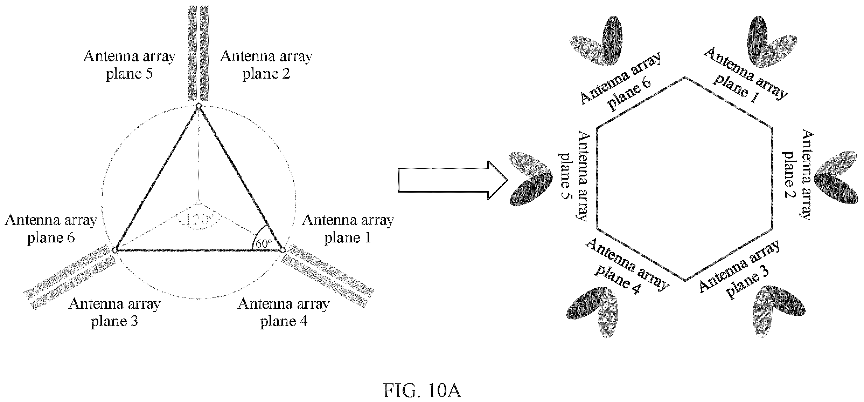

For example, FIG. 10A is a diagram of a possible implementation of an antenna system in a long term evolution (long term evolution, LTE) system scenario according to this application. For ease of description, in FIG. 10A, an antenna system including three antenna groups in this application is equivalently shown as an antenna system in a regular hexagon structure. In LTE, each antenna array plane radiates two beams, and each beam of each antenna array plane forms an intersection area with a beam of an antenna array plane in another antenna group. The intersection area is a radiation area in this application. FIG. 10A shows an antenna system according to this application. A right beam of the antenna array plane 6 and a left beam of the antenna array plane 1 form a radiation area, a right beam of the antenna array plane 1 and a left beam of the antenna array plane 2 form a radiation area, a right beam of the antenna array plane 2 and a left beam of the antenna array plane 3 form a radiation area, a right beam of the antenna array plane 3 and a left beam of the antenna array plane 4 form a radiation area, a right beam of the antenna array plane 4 and a left beam of the antenna array plane 5 form a radiation area, and a right beam of the antenna array plane 5 and a left beam of the antenna array plane 6 form a radiation area. There are six radiation areas in total.

Further, two beams that form a same radiation area have same radiation ranges and same horizontal directions of normals, so that the two beams of the same radiation area overlap as much as possible, to improve utilization of each beam of each antenna array plane. In the example shown in FIG. 10A, the right beam of the antenna array plane 1 and the left beam of the antenna array plane 2 form the radiation area, and the right beam of the antenna array plane 1 and the left beam of the antenna array plane 2 have same radiation ranges and same horizontal directions of normals.

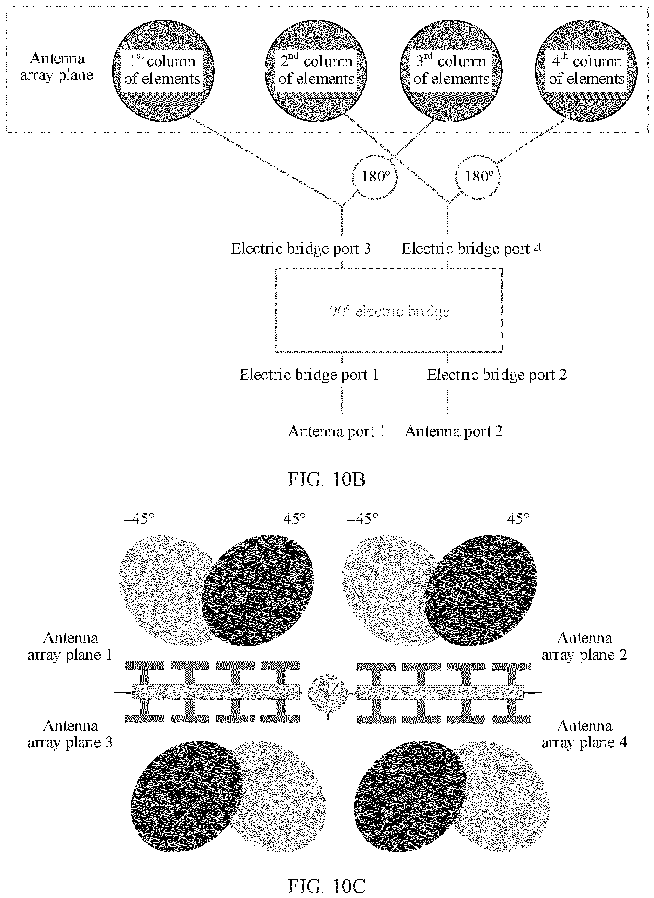

For example, with reference to FIG. 10B, the following describes an implementation in which one antenna array plane forms two beams. FIG. 10B is a diagram of a scenario in which one antenna array plane forms two beams. As shown in FIG. 10B, an antenna array plane includes four columns of elements. The four columns of antenna elements correspond to two antenna ports (including an antenna port 1 and an antenna port 2). The antenna port 1 is connected to an electric bridge port 1, and the antenna port 2 is connected to an electric bridge port 2. An electric bridge port 3 is connected to the first column of antenna elements and the third column of antenna elements through a power splitter with a power division ratio of 1:2, and a 180° phase shifter is deployed in the first column of antenna elements or the three columns of antenna elements. An electric bridge port 4 is connected to the second column of antenna elements and the fourth column of antenna elements through a power splitter with a power division ratio of 2:1, and a 180° phase shifter is deployed in the second or fourth column of antenna elements. The phase shifter is an apparatus that can adjust a phase of a signal radiated by an antenna array plane, and may be, for example, a coaxial, microstrip, or strip phase shifter. In the example in FIG. 10B, when feeding is performed at the antenna port 1, a 90° phase difference is formed between the second column of elements and the first column of elements, between the third column of elements and the second column of elements, and between the fourth column of elements and the third column of elements, so that the antenna array plane forms a beam deflected rightward by 30°. In addition, when feeding is performed at the antenna port 2, a -90° phase difference is formed between the second column of elements and the first column of elements, between the third column of elements and the second column of elements, and between the fourth column of elements and the third column of elements, so that the antenna array plane forms a beam deflected leftward by 30°. In this application, an electric bridge and a phase shifter may be independent physical apparatuses, or may be a software configuration integrated into another physical apparatus (for example, a baseband) to implement a function. This is not specifically limited herein.

In a possible implementation, the antenna system includes three antenna groups. That is, the antenna system includes six antenna array planes. Each antenna array plane includes two beams, and each beam forms a radiation area with a beam of an antenna array plane in another antenna group. Therefore, the antenna system includes six radiation areas. A radiation range of a beam of each antenna array plane may be calibrated to 60 degrees. Because two beams that form a same radiation area have same radiation ranges and same horizontal directions of normals (for example, as shown in FIG. 10A, the radiation ranges of the right beam of the antenna array plane 1 and the left beam of the antenna array plane 2 are both 60°, and the horizontal directions of the normals are the same), coverage of a radiation area formed by every two beams is also 60 degrees. Because the antenna system includes six radiation areas, the antenna system implements coverage of 60°*6=360°.

In a possible implementation, the antenna system includes two antenna groups. That is, the antenna system includes four antenna array planes. FIG. 10C is a diagram of another possible implementation of an antenna system in an LTE scenario according to this application. As shown in FIG. 10C, each antenna array plane includes two beams, and each beam forms a radiation area with a beam of an antenna array plane in another antenna group. Therefore, the antenna system includes four radiation areas. A radiation range of a beam of each antenna array plane may be calibrated to 90 degrees. Because two beams that form a same radiation area have same radiation ranges and same horizontal directions of normals, coverage of a radiation area formed by every two beams is also 90 degrees. Because the antenna system includes four radiation areas, the antenna system implements coverage of 90°*4=360°.

It should be understood that, in addition to the foregoing antenna system including two or three antenna groups, the antenna system may alternatively include another quantity of antenna groups. For example, the antenna system includes, but not limited to, four antenna groups or five antenna groups. A radiation range of each beam is adjusted according to an actual quantity of antenna groups. This is not specifically limited herein.

Solution 2: An antenna subarray synthesized from antenna elements to which all antenna ports in each antenna array plane are mapped includes one beam on a horizontal plane, and the beam and a beam of another antenna array plane cooperatively radiate, to form at least one radiation area. There may be two or more beams that form a same radiation area.

For example, as shown in FIG. 5, in an antenna system in which two antenna groups are deployed, because a quantity of antenna array planes is small, and coverage of the antenna array planes is limited, a radiation area in the antenna system is usually formed by beams of the two antenna array planes. However, as shown in FIG. 5, in an antenna system in which four antenna groups are deployed, because there are a large quantity of antenna array planes and an interval between antenna groups is short, a radiation area in the antenna system may be formed by beams of two or more antenna array planes. That is, beams of a plurality of antenna array planes intersect, to form an intersection area.

Further, a plurality of beams that form a same radiation area have same radiation ranges and different horizontal directions of normals. For example, as shown in FIG. 9, a beam of the antenna array plane 1 and a beam of the antenna array plane 2 cooperatively radiate to form the radiation area 2, and radiation ranges of the beam of the antenna array plane 1 and the beam of the antenna array plane 2 are both 120°. However, a horizontal direction of a normal of the beam of the antenna array plane 1 is different from a horizontal direction of a normal of the beam of the antenna array plane 2, and the two beams form an intersection area spanning 60° only within a range of 30 degrees to 90 degrees. It can be learned from the foregoing that, the radiation area 2 includes an intersection area (with a span of 60°) between the beam of the antenna array plane 1 and the beam of the antenna array plane 2, a non-intersection area (with a span of 30°) that is close to the antenna array plane 2 in the beam of the antenna array plane 1, and a non-intersection area (with a span of 30°) that is close to the antenna array plane 1 in the beam of the antenna array plane 2. Therefore, coverage of the radiation area 2 spans 120°.

For example, in the antenna group, two array planes in the antenna group are connected through an electric bridge. That is, the electric bridge implements power adjustment and allocation between the two antenna array planes in the antenna group, so that each antenna group further forms a bidirectional beam. A radiation range of the beam in each direction is approximately 120°. For example, it is assumed that two antenna array planes included in an antenna group 1 are an antenna array plane 1 and an antenna array plane 2, and the antenna array plane 1 and the antenna array plane 2 are connected through an electric bridge, so that the antenna group 1 forms a beam 1; and two antenna array planes included in an antenna group 2 are an antenna array plane 3 and an antenna array plane 4, and the antenna array plane 3 and the antenna array plane 4 are connected through an electric bridge, so that the antenna group 2 forms a beam 2. Because both the beam 1 and the beam 2 have two directions, when the beam 1 and the beam 2 cooperatively radiate, two intersection areas may be formed in the two directions. In this case, a radiation area formed by the beam 1 and the beam 2 includes the two intersection areas.

In Solution 2, before beams of antenna array planes form a radiation area, phase calibration needs to be performed, so that phases of beams of a same radiation area are aligned as much as possible. Therefore, before the antenna system generates the plurality of radiation areas, each antenna group in the antenna system needs to first perform intra-group phase calibration and/or inter-group phase calibration. The intra-group phase calibration is a phase calibration procedure between two antenna array planes in a same antenna group, and the inter-group phase calibration is a phase calibration procedure between two antenna array planes from different antenna groups. Specifically, the plurality of radiation areas in this application may be generated after each antenna group in the antenna system performs intra-group phase calibration; or the plurality of radiation areas in this application may be generated after each antenna group in the antenna system performs inter-group phase calibration; or the plurality of radiation areas in this application may be generated after each antenna group in the antenna system performs intra-group phase calibration and inter-group phase calibration. After each antenna group performs intra-group phase calibration and inter-group phase calibration, phases of beams in antenna array planes in the antenna system can be aligned as much as possible, so that each antenna array plane forms radiation areas with a plurality of different antenna array planes, and gains of radiation areas formed by different beams are also increased.

Further, in an intra-group phase calibration procedure, the antenna system includes a plurality of calibration ports, each calibration port corresponds to one antenna group, each calibration port is connected to two antenna array planes in the antenna group, and each calibration port is configured to perform the intra-group phase calibration procedure in an antenna group including the calibration port. An inter-group phase calibration procedure may be completed in an air interface calibration manner, or may be completed in a wired connection manner. This is not limited in this application. For example, in actual application, if a distance between two antenna array planes from different antenna groups in the inter-group phase calibration procedure is short, the two antenna array planes may perform inter-group phase calibration in a wired connection manner (for example, a calibration port is separately connected to the two antenna array planes in the inter-group phase calibration procedure). If a distance between two antenna array planes from different antenna groups in the inter-group phase calibration procedure is long, the two antenna array planes in the inter-group phase calibration procedure may perform inter-group phase calibration in a manner of transferring air interface information (that is, air interface calibration).

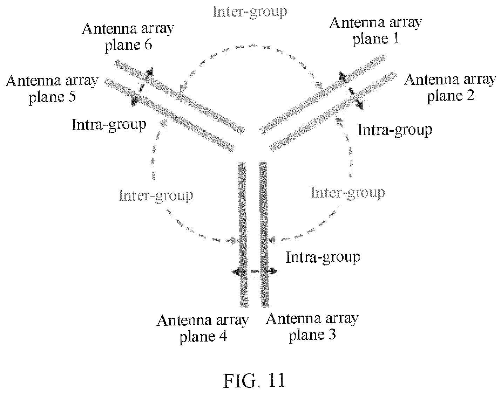

FIG. 11 is a diagram of a scenario of intra-group phase calibration and inter-group phase calibration according to this application. As shown in FIG. 11, the antenna system includes three antenna groups. An antenna array plane 1 and an antenna array plane 2 are in one group, an antenna array plane 3 and an antenna array plane 4 are in one group, and an antenna array plane 5 and an antenna array plane 6 are in one group. The intra-group phase calibration is a phase calibration procedure between two antenna array planes in a same antenna group. For example, a phase calibration procedure between the antenna array plane 1 and the antenna array plane 2 is intra-group phase calibration. The inter-group phase calibration is a phase calibration procedure between two antenna array planes from different antenna groups. For example, a phase calibration procedure between the antenna array plane 2 and the antenna array plane 3 is inter-group phase calibration. For example, the antenna system may first perform intra-group phase calibration between the antenna array plane 1 and the antenna array plane 2, perform inter-group phase calibration between the antenna array plane 2 and the antenna array plane 3 after aligning phases of the antenna array plane 1 and the antenna array plane 2, and then perform intra-group phase calibration between the antenna array plane 3 and the antenna array plane 4. This process is iteratively repeated until intra-group phase calibration between the antenna array plane 5 and the antenna array plane 6 is completed. The antenna array planes in the antenna system complete a phase alignment procedure. Further, the inter-group phase calibration between the antenna array plane 6 and the antenna array plane 1 may continue to be performed, to reduce an error in a phase calibration procedure. In actual application, the antenna system may first perform intra-group phase calibration, or may first perform inter-group phase calibration. This is not specifically limited herein.

In this application, each antenna array plane may form N radiation areas at a moment. N is an integer greater than or equal to 2, and a quantity of radiation areas included in the antenna system is greater than a quantity of antenna groups.

For example, in the scenario of Solution 1 shown in FIG. 10A, the antenna system includes three antenna groups, and each antenna array plane in the antenna group includes two beams at a same moment. Each beam forms one radiation area with a beam of another antenna array plane, and each antenna array plane forms two radiation areas. Therefore, a quantity of radiation areas included in the antenna array plane is 6, and is greater than a quantity (3) of antenna groups.

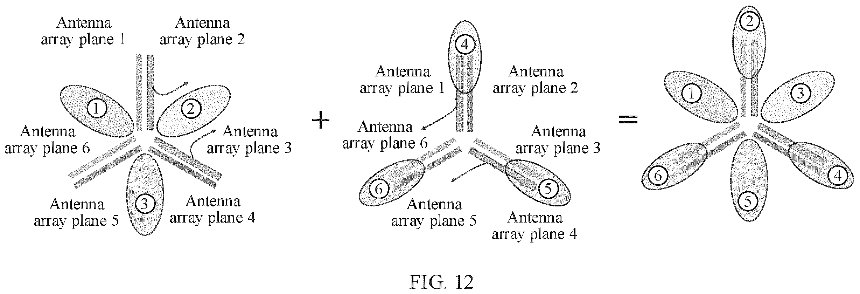

FIG. 12 is a diagram of a scenario of a plurality of radiation areas implemented based on Solution 2 in this application. In the example in FIG. 12, the antenna system includes three antenna groups, and each antenna array plane in an antenna group includes one beam at a same moment. As long as a radiation range of a beam is large enough, and horizontal directions of normals of beams of antenna array planes are close enough and dense enough, one beam of the antenna array plane may generate a plurality of radiation areas at the same time. As shown in FIG. 12, a beam of an antenna array plane 2 and a beam of an antenna array plane 3 form a radiation area 2, and at the same time, the beam of the antenna array plane 2 and a beam of the antenna array plane 5 form a radiation area 5. The antenna array plane 2 forms two radiation areas at a same moment. Similarly, a principle of another antenna array plane to form two radiation areas is the same as that of the antenna array plane 2, and details are not described herein again. Therefore, a quantity of radiation areas included in the antenna array plane is 6, and is greater than a quantity (3) of antenna groups.

Further, in a scenario in which a plurality of radiation areas are implemented based on Solution 2, if the antenna system includes enough antenna groups, so that horizontal directions of normals of beams of the antenna array planes are close enough and dense enough (for example, the antenna system includes four antenna groups shown in FIG. 5), each antenna array plane may form three, four, or more radiation areas at a same moment. This is not specifically limited herein.

In a possible implementation, in a scenario in which a plurality of radiation areas are implemented based on Solution 2, each antenna array plane forms one radiation area at a moment, and a quantity of radiation areas included in the antenna system is equal to a quantity of antenna groups. For example, in the example in FIG. 9, the antenna system includes three antenna groups, and each antenna array plane forms one radiation area with only one antenna array plane. In this case, a quantity of radiation areas included in the antenna array plane is 3, and is equal to a quantity (3) of antenna groups. Further, when radiation ranges and horizontal directions of normals of antenna array planes from different antenna groups can meet a condition of forming a radiation area (that is, beams from the antenna array planes in the different antenna groups can form at least an intersection area), each antenna array plane may select another antenna array plane for cooperative radiation based on an actual application scenario, to perform phase calibration, so as to obtain the radiation area. For example, in the example in FIG. 12, it may be determined according to a radiation range and a horizontal direction of a normal of the antenna array plane 2, that the beam of the antenna array plane 2 and the beam of the antenna array plane 5 may form the radiation area 5, and at the same time, the beam of the antenna array plane 2 and the beam of the antenna array plane 3 may also form the radiation area 2. The antenna array plane 2 may select, according to an actual application scenario, another antenna array plane (the antenna array plane 5 or the antenna array plane 3) that needs to perform cooperative radiation with the antenna array plane 2, to perform phase calibration and obtain a radiation area (the radiation area 5 or the radiation area 2).

In conclusion, in this application, when the quantity of antenna groups is fixed, the quantity of radiation areas generated by the antenna system may be adjusted based on an actual situation, to improve working flexibility of the antenna system.

In a possible implementation, each radiation area includes a plurality of cells, and each cell corresponds to one carrier frequency. Specifically, a cell is also referred to as a cellular cell, and is a minimum unit area covered in the antenna system.

In a possible implementation, the antenna system includes one target radiation area, and the target radiation area is at least two radiation areas that serve an access device in all radiation areas in the antenna system. Specifically, the antenna system may determine, from all the radiation areas in the antenna system according to an access requirement of the access device, the at least two radiation areas that serve the access device, to implement cooperation between different radiation areas and improve an antenna gain.

In a possible implementation, the target radiation area is the radiation areas in the antenna system. That is, all the radiation areas in the antenna system are selected at the same time, to provide a service for an access device, so as to further improve an antenna gain.

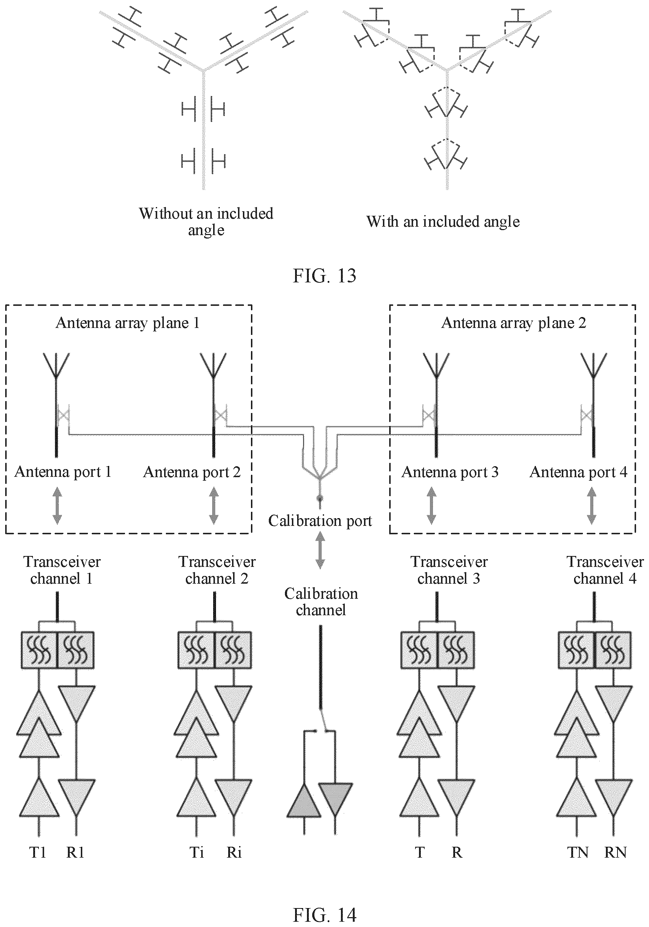

In a possible implementation, each antenna group includes a first included angle and a second included angle, the first included angle and the second included angle each are an included angle formed between each antenna array plane and an antenna element in the antenna array plane in the antenna group, and the first included angle and the second included angle are axially symmetric with respect to the mounting panel. FIG. 13 is a diagram of a structure of an antenna group including the first included angle and the second included angle according to this application. As shown in FIG. 13, in a structure in which no included angle is formed between an antenna array plane and an antenna element, because two antenna array planes that form a same radiation area have different mounting angles, horizontal directions of normals of beams of the two antenna array planes are different, and the two beams cooperatively radiate, to form a radiation area. However, in this case, some signals in each of the two beams are excluded from the radiation area, and the radiation area is not formed, resulting in a waste of resources. In a structure in which an included angle is formed between an antenna array plane and an antenna element, the antenna groups include same first included angles and same second included angles. In this case, under the effect of the first included angle and the second included angle, antenna elements in two antenna array planes that form a same radiation area may be more parallel, and horizontal directions of normals of two beams formed by the two antenna array planes may be more consistent. This greatly increases an intersection area between the two beams and increases the radiation area, and further improves beam utilization.

In a possible implementation, the antenna system includes a plurality of calibration ports, each calibration port corresponds to one antenna group, and each calibration port is connected to two antenna array planes in the antenna group, so that the two antenna array planes in the same antenna group perform intra-group phase calibration. FIG. 14 is a diagram of a structure in which two antenna array planes in an antenna group are connected to a same calibration port. In a passive antenna system shown in FIG. 14, two antenna array planes in each antenna group are connected to a same remote radio unit (remote radio unit, RRU), and one calibration port is separately connected to the two antenna array planes in the antenna group.

In a possible implementation, the antenna system includes a plurality of calibration ports, and each calibration port is connected to one antenna array plane.

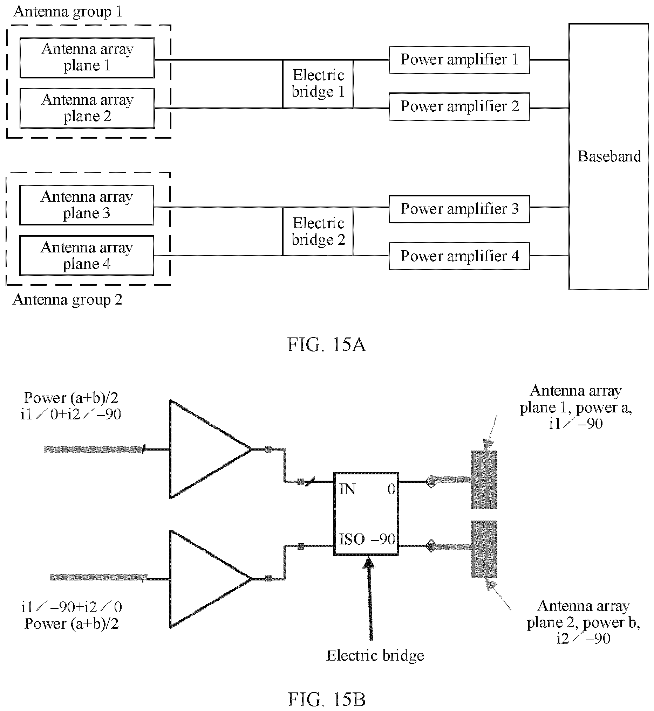

The antenna system includes a plurality of radiation areas, and each radiation area may serve different terminal devices. However, in actual application, quantities of terminal devices in the radiation areas are usually different and unbalanced. For a radiation area with a large quantity of terminal devices, power of a beam in the radiation area should be increased, to meet requirements of the terminal devices in the radiation area. Therefore, one electric bridge may be configured in each antenna group, two output ends of the electric bridge are respectively connected to two antenna array planes in the antenna group, and two input ends of the electric bridge are respectively connected to two power amplifiers. The electric bridge is configured to adjust power levels of the two antenna array planes in the antenna group, to improve flexibility of power of the antenna array planes, and adapt to power requirements of different radiation areas. In addition, because one electric bridge is connected to the two antenna array planes in the antenna group, a wired connection distance of the electric bridge is shortened, costs of deploying the electric bridge are reduced, and a power loss is reduced. FIG. 15A is a diagram of a structure of configuring an electric bridge in an antenna group according to this application. In an antenna system, an antenna group 1 includes an antenna array plane 1 and an antenna array plane 2, and an antenna group 2 includes an antenna array plane 3 and an antenna array plane 4. As shown in FIG. 15A, the antenna array plane 1 and the antenna array plane 2 are respectively connected to two output ends of an electric bridge 1, and the two output ends of the electric bridge 1 are respectively connected to two power amplifiers (a power amplifier 1 and a power amplifier 2), to implement power sharing between the antenna array plane 1 and the antenna array plane 2. When a quantity of terminal devices in a radiation area formed by the antenna array plane 1 is large, a power requirement of the radiation area is high. In this case, more power may be allocated to the antenna array plane 1 and less power may be allocated to the antenna array plane 2 through the electric bridge 1, to meet the power requirement of the radiation area formed by the antenna array plane 1, and further increase coverage.

FIG. 15B is a diagram of adjusting power of antenna array planes in an antenna group through an electric bridge according to this application. As shown in FIG. 15B, a baseband controls phases of signals at two input ports, so that phases of output ports change flexibly. A signal of an antenna array plane 1 is i1, and an output power requirement of the antenna array plane 1 is a. A signal of an antenna array plane 2 is i2, and an output power requirement of the antenna array plane 2 is b. A signal fed into a port of a power amplifier 1 is: i1∠0°+i2∠-90°, and a signal fed into a port of a power amplifier 2 is: i1 ∠-90°+i2∠0°. In this way, after signals pass through the power amplifier 1, the power amplifier 2, and the electric bridge, signals at output ports may be i1 ∠-90° and i2∠-90°, and radiation power of the antenna array plane 1 and the antenna array plane 2 is a and b respectively. However, power of the output ports of both the power amplifier 1 and the power amplifier 2 is (a+b)/2. For example, if a=2 watts, and b=0 watts, output power of both the power amplifier 1 and the power amplifier 2 is 1 watt. This implements power sharing, increases the maximum transmit power of the antenna array plane, and further increases coverage.

In actual application, one antenna array plane usually has a plurality of antenna ports. Therefore, one antenna group may include a plurality of electric bridges, and two output ends of each electric bridge are separately connected to one of the antenna ports in the two antenna array planes in the antenna group.

Because the two antenna array planes are symmetrically mounted in the antenna group, a part of signals of each antenna array plane are transmitted to the other antenna array plane in the antenna group, causing interference and reducing a front-to-back ratio of the antenna group. In view of this, the mounting panel in each antenna group may include at least one turned edge, and the turned edge is configured to block a signal that is radiated by an antenna array plane in the antenna group in a reverse direction of a normal, to improve the front-to-back ratio of the antenna group. For example, the turned edge may be a metal plate.

In a possible implementation, the mounting panel in each antenna group includes at least one electromagnetic band gap (electromagnetic band gap, EBG), and the EBG is configured to block a signal that is radiated by an antenna array plane in the antenna group in a reverse direction of a normal, to improve the front-to-back ratio of the antenna group.

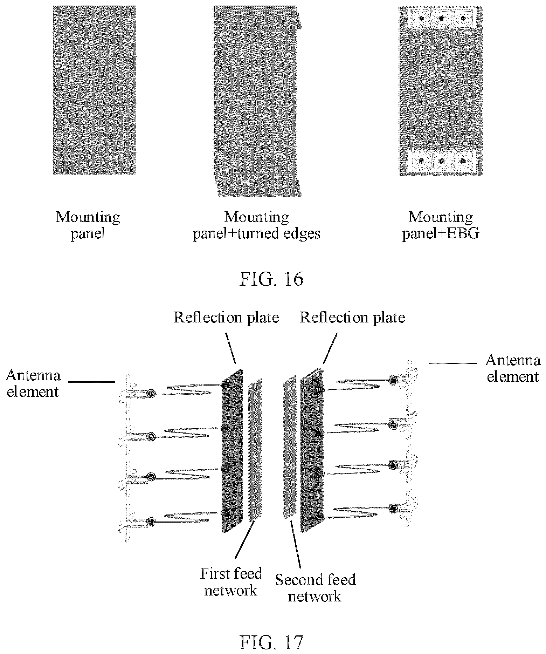

FIG. 16 is a diagram of a structure of a mounting panel including turned edges or electromagnetic band gaps according to this application. For example, in the example in FIG. 16, the mounting panel may include two turned edges located at the top and the bottom of the mounting panel. A signal radiated by an antenna array plane in the antenna group in a reverse direction of a normal is blocked by the two turned edges. For another example, in the example in FIG. 16, EBGs are mounted at both the top and the bottom of the mounting panel. A signal radiated by an antenna array plane in the antenna group in a reverse direction of a normal is blocked by the EBGs. It should be noted that, in actual application, quantities of turned edges and EBGs are not limited in this application, and mounting positions of the edges and the EBGs are not limited, either.

The antenna system in this application may be a passive antenna system, or may be an active antenna system. The following provides separate descriptions.

In a passive antenna system, two antenna array planes in each antenna group are connected to a same remote radio unit RRU (as shown in FIG. 7, one RRU is connected to two antenna array planes in an antenna group). A mounting panel in each antenna group includes a first feed network, a second feed network, and at least one reflection plate, and the first feed network and the second feed network each feed power to a different antenna array plane in the antenna group including the first feed network and the second feed network. The reflection plate is a structure used to reflect the first feed network and the second feed network. For example, the reflection plate may be a metal plate.

FIG. 17 is a diagram of a possible structure of a passive antenna system according to this application. As shown in FIG. 17, in the passive antenna system, a mounting panel in each antenna group includes a first feed network, a second feed network, and two reflection plates, and the first feed network and the second feed network are located between the two reflection plates.

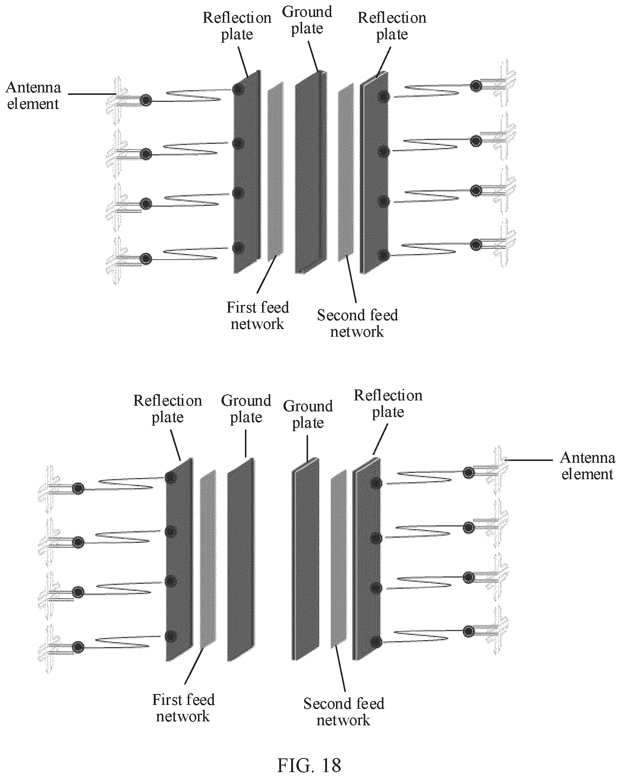

FIG. 18 is a diagram of another possible structure of a passive antenna system according to this application. As shown in FIG. 18, in the passive antenna system, in addition to the first feed network, the second feed network, and the two reflection plates, the mounting panel further includes at least one ground plate, and the ground plate is located between the first feed network and the second feed network. The ground plate is a structure used to reflect the first feed network and the second feed network. For example, the ground plate may be a metal plate.

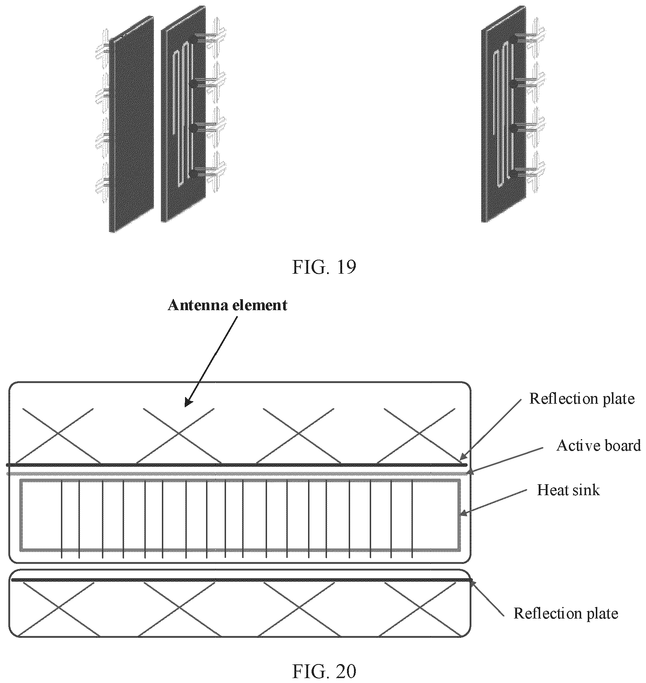

FIG. 19 is a diagram of another possible structure of a passive antenna system according to this application. As shown in FIG. 19, in the passive antenna system, the mounting panel includes the first feed network, the second feed network, and at least one reflection plate, and the at least one reflection plate is located between the first feed network and the second feed network. The first feed network and the second feed network may be mounted on the reflection plate, to reduce a thickness and a weight of the antenna group. Specifically, the mounting panel may include two reflection plates, and the first feed network and the second feed network are respectively mounted on planes of different reflection plates. Alternatively, the mounting panel may include one reflection plate, and the first feed network and the second feed network may be mounted on two planes of the reflection plate, to further reduce a thickness and a weight of the antenna group.

In an active antenna system, two antenna array planes in each antenna group are located in a same active antenna unit (active antenna unit, AAU), and a mounting panel in each antenna group includes at least one heat sink and at least one active board. The heat sink and the active board are located between the two antenna array planes in the antenna group. The heat sink is configured to dissipate heat of the at least one active board, and the at least one active board is configured to feed power to different antenna array planes in the antenna group including the at least one active board. In actual application, the active board may be connected to the antenna array plane through a radio frequency cable (for example, a coaxial cable, a microstrip cable, or a strip cable), so that the active board feeds power to the antenna array plane.

FIG. 20 is a diagram of a possible structure of an active antenna system according to this application. As shown in FIG. 20, in an antenna group of the active antenna system, a mounting panel includes one heat sink and one active board, the active board is connected to two antenna array planes in the antenna group, the active board simultaneously supplies power to antenna elements on the two antenna array planes in the antenna group, the heat sink and the active board are located between two reflection plates, and heat generated when the active board works is dissipated by the heat sink. The mounting panel has a simple structure, and only one heat sink and one active board are required. This facilitates mounting an electric bridge between the two antenna array planes. In addition, hardware resources are saved, and a thickness and a weight of the antenna group are reduced.

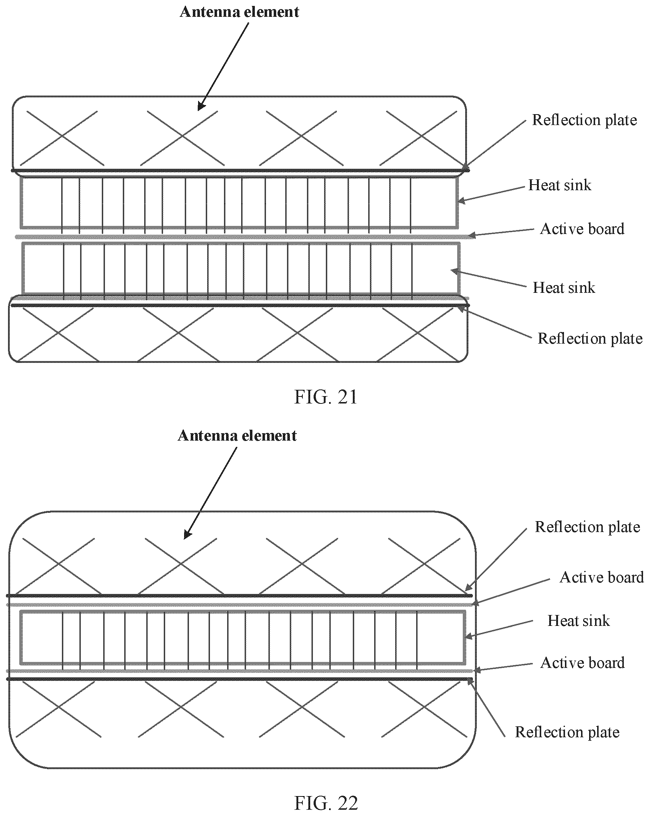

FIG. 21 is a diagram of another possible structure of an active antenna system according to this application. As shown in FIG. 21, in an antenna group of the active antenna system, a mounting panel includes two heat sink and one active board, the active board is connected to two antenna array planes in the antenna group, the active board simultaneously supplies power to antenna elements on the two antenna array planes in the antenna group, and the active board is located between the two heat sinks. A structure of the mounting panel is: a reflection plate, a heat sink, the active board, a heat sink, and a reflection plate from outside to inside. The mounting panel requires only one active board. This saves hardware resources and reduces a thickness and a weight of the antenna group. In addition, because two heat sinks are deployed, a heat dissipation capability of the antenna group is improved.

FIG. 22 is a diagram of another possible structure of an active antenna system according to this application. As shown in FIG. 22, in an antenna group of the active antenna system, a mounting panel includes one heat sink and two active boards, each active board is connected to a different antenna array plane in the antenna group, each active board supplies power to antenna elements of the different antenna array plane in the antenna group, and the heat sink is located between the two active boards. A structure of the mounting panel is: a reflection plate, an active board, the heat sink, an active board, and a reflection plate from outside to inside.

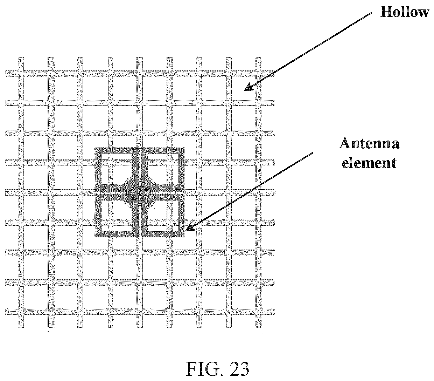

Further, in the active antenna system, the reflection plate in the mounting panel may be configured as a hollow reflection plate shown in FIG. 23. A metal structure of the hollow reflection plate is in a grid shape, and the antenna element may be located at a position facing a hollow, so that heat of the active board is easily dissipated from the hollow, to accelerate heat dissipation. In addition, a structure of the hollow reflection plate may also reduce overall quality of the antenna group.

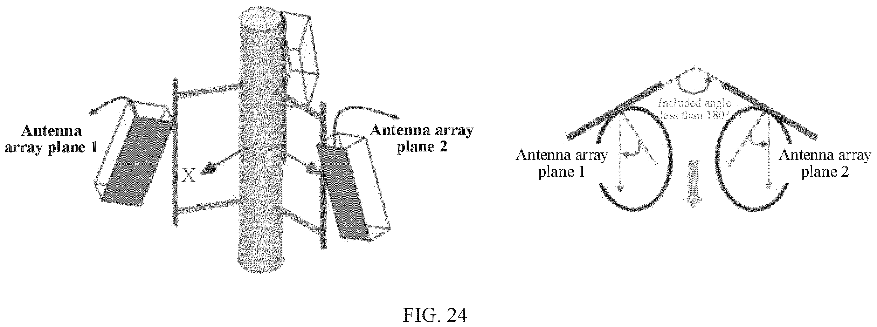

FIG. 24 is a diagram of an included angle between two antenna array planes that form a same radiation area according to this application. As shown in FIG. 24, in each antenna group, a distance between the top and a pole is less than a distance between the bottom and the pole, and an included angle between two antenna array planes (for example, an antenna array plane 1 and an antenna array plane 2 in FIG. 24) that form a same radiation area is less than 180°. The included angle between the two antenna array planes is an angle formed from a positive direction of a normal of one antenna array plane to a positive direction of a normal of the other antenna array plane. Therefore, in the two antenna array planes that form the same radiation area, horizontal directions of normals of two beams formed by the two antenna array planes may be as consistent as possible, to greatly increase an intersection area between the two beams, improve beam utilization, reduce interference between cells, and improve capacity.

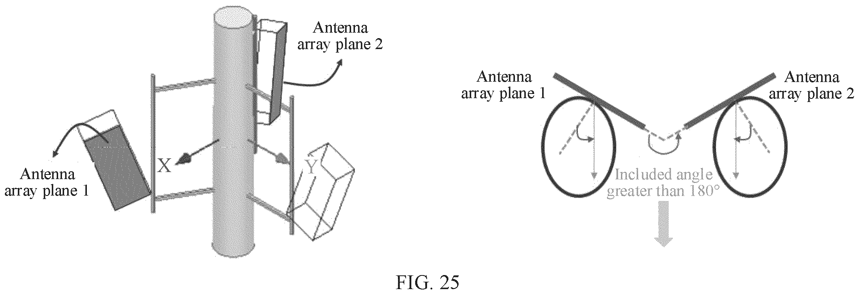

FIG. 25 is a diagram of another included angle between two antenna array planes that form a same radiation area according to this application. As shown in FIG. 25, in each antenna group, a distance between the top and a pole is greater than a distance between the bottom and the pole, and an included angle between two antenna array planes (for example, an antenna array plane 1 and an antenna array plane 2 in FIG. 25) that form a same radiation area is greater than 180°. The included angle between the two antenna array planes is an angle formed from a positive direction of a normal of one antenna array plane to a positive direction of a normal of the other antenna array plane. Therefore, in the two antenna array planes that form the same radiation area, horizontal directions of normals of two beams formed by the two antenna array planes may be as consistent as possible, to greatly increase an intersection area between the two beams, improve beam utilization, reduce interference between cells, and improve capacity.

## Claims

1. An antenna system, comprising a plurality of antenna groups, wherein
each antenna group comprises two antenna array planes and one mounting panel, the two antenna array planes are symmetrically mounted on two planes of the mounting panel, and each antenna array plane comprises at least one antenna element; and
the two antenna array planes in each antenna group work simultaneously, the antenna system comprises a plurality of radiation areas, and each radiation area is formed by cooperative radiation of beams from a plurality of antenna array planes in different antenna groups.

2. The antenna system according to claim 1, wherein each antenna array plane comprises two beams on a horizontal plane, and an intersection area between each beam and a beam of another antenna array plane is the radiation area.

3. The antenna system according to claim 2, wherein the two beams that form the radiation area have same radiation ranges and same horizontal directions of normals.

4. The antenna system according to claim 3, wherein the antenna system comprises three antenna groups, and a radiation range of each beam is 60°.

5. The antenna system according to claim 3, wherein the antenna system comprises two antenna groups, and a radiation range of each beam is 90°.

6. The antenna system according to claim 1, wherein each antenna array plane comprises one beam on a horizontal plane, and the beam and a beam of another antenna array plane radiate cooperatively to form the radiation area.

7. The antenna system according to claim 6, wherein a plurality of beams that form the radiation area have same radiation ranges and different horizontal directions of normals.

8. The antenna system according to claim 6 or 7, wherein the plurality of radiation areas are formed after each antenna group in the antenna system performs intra-group phase calibration, and the intra-group phase calibration is a phase calibration procedure between two antenna array planes in a same antenna group.

9. The antenna system according to claim 6 or 7, wherein the plurality of radiation areas are formed after each antenna group in the antenna system performs inter-group phase calibration, and the inter-group phase calibration is a phase calibration procedure between two antenna array planes from different antenna groups.

10. The antenna system according to claim 6 or 7, wherein the plurality of radiation areas are formed after each antenna group in the antenna system performs intra-group phase calibration and inter-group phase calibration, the intra-group phase calibration is a phase calibration procedure between two antenna array planes in a same antenna group, and the inter-group phase calibration is a phase calibration procedure between two antenna array planes from different antenna groups.

11. The antenna system according to claim 8 or 10, wherein the antenna system comprises a plurality of calibration ports, each calibration port corresponds to one antenna group, each calibration port is connected to two antenna array planes in the antenna group, and each calibration port is configured to perform the intra-group phase calibration.

12. The antenna system according to any one of claims 1 and 6 to 11, wherein each antenna array plane is configured to form one radiation area at a moment, and a quantity of radiation areas comprised in the antenna system is equal to a quantity of antenna groups.

13. The antenna system according to claims 1 to 11, wherein each antenna array plane is configured to form N radiation areas at a moment, N is an integer greater than or equal to 2, and a quantity of radiation areas comprised in the antenna system is greater than a quantity of antenna groups.

14. The antenna system according to claims 1 to 13, wherein the radiation area comprises a plurality of cells, and each cell corresponds to one carrier frequency.

15. The antenna system according to claims 1 to 14, wherein the antenna system comprises one target radiation area, and the target radiation area is at least two radiation areas that serve an access device in all the radiation areas.

16. The antenna system according to claim 15, wherein the target radiation area is all the radiation areas in the antenna system.

17. The antenna system according to any one of claims 1 to 16, wherein each antenna group comprises a first included angle and a second included angle, the first included angle and the second included angle each are an included angle formed between each antenna array plane and an antenna element in the antenna array plane in the antenna group, and the first included angle and the second included angle are axially symmetric with respect to the mounting panel.

18. The antenna system according to any one of claims 1 to 17, wherein
each antenna group comprises at least one electric bridge, two output ends of the electric bridge are respectively connected to the two antenna array planes in the antenna group, two input ends of the electric bridge are respectively connected to two power amplifiers, and the electric bridge is configured to adjust power levels of the two antenna array planes.

19. The antenna system according to any one of claims 1 to 18, wherein the antenna system comprises a plurality of poles, each antenna group is mounted on one pole, the two antenna array planes in the antenna group are symmetric with respect to a first plane of the mounting panel, and a central axis of the pole is located on the first plane.

20. The antenna system according to claim 19, wherein in each antenna group, a distance between a top and the pole is less than a distance between a bottom and the pole, and an included angle between two antenna array planes that form a same radiation area is less than 180°.

21. The antenna system according to claim 19, wherein in each antenna group, a distance between a top and the pole is greater than a distance between a bottom and the pole, and an included angle between two antenna array planes that form a same radiation area is greater than 180°.

22. The antenna system according to any one of claims 1 to 21, wherein
the mounting panel in each antenna group comprises at least one turned edge, and the turned edge is configured to block a signal that is radiated by an antenna array plane in the antenna group in a reverse direction of a normal.

23. The antenna system according to any one of claims 1 to 21, wherein
the mounting panel in each antenna group comprises at least one electromagnetic band gap EBG, and the EBG is configured to block a signal that is radiated by an antenna array plane in the antenna group in a reverse direction of a normal.

24. The antenna system according to any one of claims 1 to 23, wherein the antenna system is a passive antenna system, the two antenna array planes in each antenna group are connected to a same remote radio unit RRU, the mounting panel in each antenna group comprises a first feed network, a second feed network, and at least one reflection plate, and the first feed network and the second feed network each feed power to a different antenna array plane in the antenna group comprising the first feed network and the second feed network.

25. The antenna system according to claim 24, wherein the mounting panel comprises two reflection plates, and the first feed network and the second feed network are located between the two reflection plates.

26. The antenna system according to claim 25, wherein the mounting panel further comprises at least one ground plate, and the at least one ground plate is located between the first feed network and the second feed network.

27. The antenna system according to claim 24, wherein the at least one reflection plate is located between the first feed network and the second feed network.

28. The antenna system according to any one of claims 1 to 23, wherein the antenna system is an active antenna system, the mounting panel in each antenna group comprises at least one heat sink and at least one active board, the heat sink and the active board are located between the two antenna array planes in the antenna group, the heat sink is configured to dissipate heat of the at least one active board, and the at least one active board is configured to feed power to the antenna array planes in the antenna group comprising the at least one active board.

29. The antenna system according to claim 28, wherein the mounting panel comprises one heat sink and one active board, and the active board is connected to the two antenna array planes in the antenna group.

30. The antenna system according to claim 28, wherein the mounting panel comprises two heat sinks and one active board, the active board is located between the two heat sinks, and the active board is connected to the two antenna array planes in the antenna group.

31. The antenna system according to claim 28, wherein the mounting panel comprises one heat sink and two active boards, each active board is connected to one antenna array plane in the antenna group, and the heat sink is located between the two active boards.
